# FASCICULE DE BREVET EUROPEEN

(11) **EP 3 999 779 B1**
(45) Date de publication et mention de la délivrance du brevet: **20.12.2023**
(21) Numéro de dépôt: 20750326.9
(22) Date de dépôt: 08.07.2020
(51) Int. Cl.: F23R 7/00, F02C 5/12

(54) **CHAMBRE DE COMBUSTION DE TURBOMACHINE A VOLUME CONSTANT**
BRENNKAMMER EINER TURBOMASCHINE MIT KONSTANTEM VOLUMEN
CONSTANT-VOLUME TURBOMACHINE COMBUSTION CHAMBER

(30) Priorité: 15.07.2019 FR 1907970
(43) Date de publication de la demande: 25.05.2022
(73) Titulaire: SAFRAN AIRCRAFT ENGINES, 75015 Paris (FR)
(72) Inventeur: ESCURE, Didier René André, 77550 MOISSY-CRAMAYEL (FR); TANTOT, Nicolas Jérôme Jean, 77550 MOISSY-CRAMAYEL (FR)
(74) Mandataire: Brevalex
(86) Numéro de dépôt international: PCT/FR2020/051211
(87) Numéro de publication internationale: WO 2021/009439

(56) Documents cités:
- GB-A- 1 222 272
- US-A- 2 579 321
- US-A- 2 898 736
- US-A- 2 928 242
- US-A- 4 570 438
- US-A1- 2018 356 093

## Description

### DOMAINE TECHNIQUE

L'invention concerne une chambre de combustion pour une turbomachine d'aéronef qui est du type à volume constant.

L'invention concerne aussi une turbomachine comportant une telle chambre de combustion.

### ÉTAT DE LA TECHNIQUE ANTÉRIEURE

A la différence d'une chambre de combustion de turbomachine classique, dite à "pression constante", une chambre de combustion à volume constant pour turbomachine fonctionne selon le cycle admission - combustion- échappement, et pour lequel la combustion s'effectue dans un volume constant.

Une telle chambre de combustion à volume constant est connue du document US 2,579,321 et comprend à son entrée une soupape d'admission d'air comprimé, qui est mobile entre une position ouverte et une position fermée, et comprend à sa sortie une soupape d'échappement de gaz brulés, qui est aussi mobile entre une position ouverte et une position fermée.

Les positions des soupapes sont pilotées de manière synchronisées afin de mettre en oeuvre les trois phases successives du cycle déterminé précédemment.

Un exemple de chambre de combustion à volume constant est constitué d'un corps cylindrique possédant un axe principal coaxial au reste de la turbomachine.

Ce corps comporte ainsi un conduit central coaxial à son axe principal qui est traversé en permanence par une partie du flux d'air comprimé et des tubes de combustion dont chacun est destiné à former un volume de combustion.

Les tubes de combustion sont parallèles à l'axe principal du corps et sont répartis en couronne autour de l'axe principal du corps.

La chambre de combustion est du type "multitubes".

Elle comporte aussi une soupape d'admission et une soupape d'échappement qui coopèrent avec les deux extrémités de chaque tube de combustion pour permettre d'ouvrir le conduit pour qu'il soit traversé par de l'air comprimé, ou pour l'obturer, partiellement ou en partie, pour mettre en oeuvre les phases du cycle mentionnées précédemment.

Au fur et à mesure du fonctionnement de la chambre de combustion, les pics de températures générés par les modes de combustion à volume constant, conduisent à une élévation de la température globale du corps par effet radiatif.

Cela impacte la tenue mécanique de l'ensemble des tubes de combustion, cette situation étant aggravée par la présence d'ondes de choc dans les tubes de combustion.

La partie radialement interne du corps est refroidie par l'air comprimé circulant dans le conduit central.

Par contre, aucun aménagement n'est prévu pour refroidir la partie radialement externe du corps.

L'invention a pour but de proposer une chambre de combustion permettant d'améliorer la situation thermique globale du corps.

### EXPOSÉ DE L'INVENTION

L'invention propose une chambre de combustion de turbomachine d'aéronef présentant un axe principal et comportant :
- un corps de révolution coaxial à l'axe principal dans lequel une pluralité de tubes de combustion sont formés, lesdits tubes de combustion s'étendant principalement selon la direction de l'axe principal du corps et étant répartis en couronne autour dudit axe principal,
- un premier disque rotatif perforé qui est monté au niveau d'une première extrémité axiale du corps et qui est mobile en rotation autour de l'axe principal pour ouvrir ou fermer de manière sélective une première extrémité de chacun desdits tubes de combustion, et
- un deuxième disque rotatif perforé qui est monté au niveau d'une deuxième extrémité axiale du corps et qui est mobile en rotation autour de l'axe principal pour ouvrir ou fermer de manière sélective une deuxième extrémité de chacun desdits tubes de combustion,
caractérisée en ce que le corps comporte une pluralité de segments de refroidissement qui s'étendent principalement selon la direction de l'axe principal, qui sont répartis en couronne autour dudit axe principal et autour des tubes de combustion.

La présence de segments de refroidissements répartis à la périphérie des tubes de combustion permet d'avoir un refroidissement du corps par le flux d'air comprimé, au niveau de sa périphérie externe.

De préférence, chaque disque rotatif est coaxial à l'axe principal, comporte une série de lumières destinées à venir en face d'une extrémité de chaque tube de combustion et de manière sélective, et comporte une série d'orifices destinés à venir en face d'une extrémité de chaque segment de refroidissement de manière sélective.

De préférence, les lumières et/ou les orifices de chaque disque rotatif sont de forme circulaire, elliptique, rectangulaire, oblong ou ovoïde.

De préférence, chaque disque rotatif comporte un même nombre de lumières que d'orifices et les lumières sont décalées circonférentiellement par rapport aux orifices.

De préférence, le corps est cylindrique et comporte un logement cylindrique radialement central et chaque disque rotatif comporte un orifice central qui communique avec l'extrémité associée du logement cylindrique radialement central du corps.

L'invention concerne aussi une turbomachine d'aéronef comportant une veine primaire de circulation d'air dans laquelle sont disposés, selon le sens d'écoulement d'air dans la veine primaire, au moins un compresseur, une chambre de combustion et au moins une turbine, caractérisée en ce que la chambre de combustion est une chambre de combustion telle que définie précédemment.

De préférence, la turbomachine comporte un arbre reliant l'un dudit au moins un compresseur à l'une de ladite au moins une turbine, ledit arbre étant coaxial à l'axe principal du corps de la chambre de combustion, et l'un et/ou l'autre des disques rotatifs est entraîné en rotation par ledit arbre.

De préférence, la turbomachine comporte un arbre reliant l'un dudit au moins un compresseur à l'une de la au moins une turbine, ledit arbre étant coaxial à l'axe principal du corps de la chambre de combustion, et la turbomachine comporte un organe d'entrainement de l'un et/ou l'autre des disques rotatifs qui est indépendant dudit arbre.

De préférence, la turbomachine comporte des moyens de régulation de la vitesse de rotation de l'un et/ou l'autre des disques rotatifs par rapport à la vitesse de rotation dudit arbre.

De préférence, lesdits moyens de régulation sont aptes à immobiliser les disques rotatifs en rotation autour de l'axe principal.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
[Fig. 1] est une représentation schématique en demi-section axiale d'une turbomachine comportant une chambre de combustion à volume constant selon l'invention ;
[Fig. 2] est une vue en bout d'un disque rotatif représenté à la figure 1 ;
[Fig. 3] est une vue en bout du corps de la chambre de combustion représentée à la figure 1, montrant les différents canaux qu'il comporte ;
[Fig. 4] est une vue similaire à celle de la figure 1, dans laquelle un réducteur de vitesse est interposé entre chaque disque et l'arbre associé ;
[Fig. 5] est une vue similaire à celle de la figure 1, selon laquelle les disques sont entraînés par un actionneur indépendant.

### EXPOSÉ DÉTAILLÉ DE MODES DE RÉALISATION PARTICULIERS

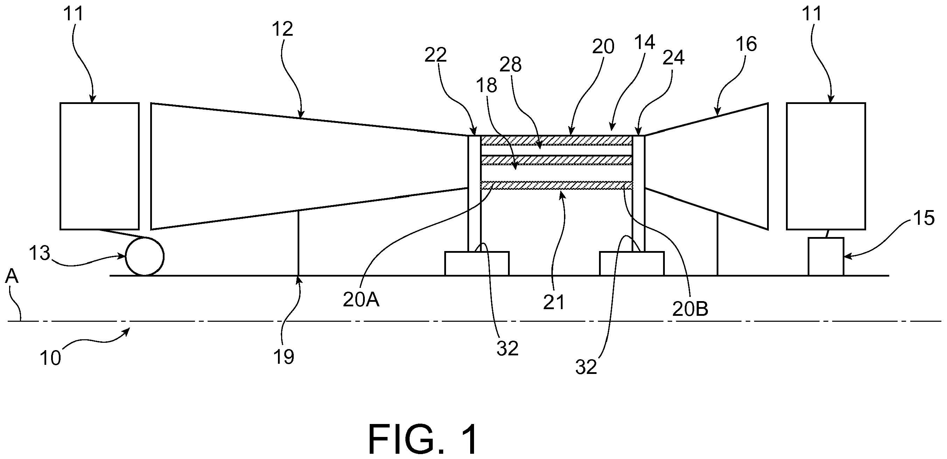

On a représenté à la figure 1 une turbomachine 10, par exemple une turbomachine d'aéronef.

La turbomachine 10 présente un axe principal A, qui est un axe de révolution de ses parties tournantes principales.

Elle comporte, d'amont en aval selon le sens d'écoulement axial d'un flux de gaz dans la turbomachine 10, qui est de gauche à droite en se reportant à la figure 1, un compresseur 12, une chambre de combustion 14 et une turbine 16.

Il sera compris que la turbomachine 10 peut ne comporter qu'un seul compresseur 12, comme représenté, ou bien comporter un autre compresseur (non représenté) agencé en amont du compresseur 12 représenté à la figure 1, le compresseur 12 représentée à la figure 1 étant un compresseur haute pression, le compresseur en amont étant un compresseur basse pression.

De même, la turbomachine 10 peut ne comporter qu'une seule turbine 16 comme représenté, ou bien comporter une autre turbine (non représentée) agencée en aval de la turbine 16 représentée à la figure 1, la turbine 16 représentée à la figure 1 étant une turbine haute pression, la turbine en aval étant une turbine basse pression.

La turbine 16 est reliée au compresseur 12 par un arbre 19. Dans le cas d'une turbomachine 10 comportant deux compresseurs et deux turbines, la turbine basse pression est reliée au compresseur basse pression par un arbre associé (non représenté) et la turbine haute pression 16 est reliée au compresseur haute pression 12 par un arbre haute pression 19.

La turbomachine 10 comporte en outre un carter fixe 11, qui est ici représenté par deux rectangles, qui a pour but de guider le compresseur 12, la turbine 16 et l'arbre 19 en rotation dans la turbomachine, notamment par l'intermédiaire d'un palier à billes 13 et un palier à rouleaux 15.

La chambre de combustion 14 est du type à volume constant, c'est à dire qu'elle met en oeuvre un cycle admission - combustion - échappement pour lequel la combustion s'effectue dans un volume constant.

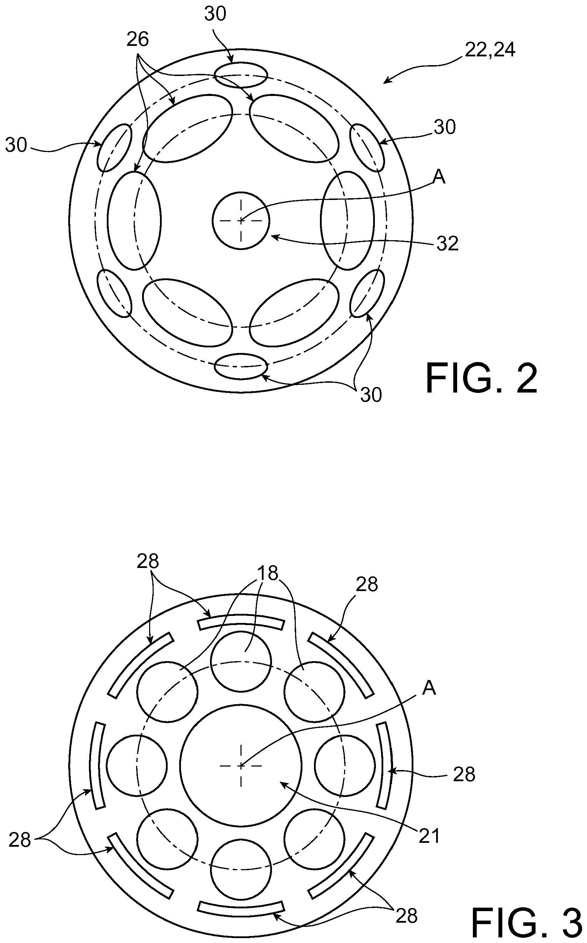

La chambre de combustion 14 est en outre du type multitubes, c'est-à-dire qu'elle comporte une pluralité de tubes 18 répartis en couronne autour de l'axe principal A de la turbomachine 10, dans chacun desquels une combustion en volume fermé est mise en oeuvre, comme on peut le voir à la figure 3.

Les tubes 18 s'étendent principalement selon la direction de l'axe principal A.

Selon un mode de réalisation préféré, tous les tubes 18 sont rectilignes et parallèles à l'axe principal A. Ils sont en outre répartis régulièrement et à équidistance les uns des autres et les uns à l'axe principal A, c'est-à-dire qu'ils sont répartis symétriquement autour de l'axe principal A pour former une couronne.

Il sera compris que l'invention n'est pas limitée à ce mode de réalisation et que les tubes 18 peuvent ne pas être rectilignes et/ou parallèles à l'axe principal A.

Par contre, quel que soit le mode de réalisation, les tubes 18 sont tous agencés symétriquement par rapport à l'axe principal A, pour former une couronne.

La chambre de combustion 14 comporte un corps 20 cylindrique dans lequel les tubes 18 de combustion sont formés. Le corps 20 est coaxial à l'axe principal A et il comporte un logement cylindrique radialement interne 21 qui est notamment destiné à être traversé par l'arbre 19 reliant le compresseur 12 à la turbine 16.

Chaque extrémité amont et aval de chaque tube de combustion 18 est sélectivement ouverte ou fermée selon la phase du cycle de combustion dans laquelle le tube de combustion 18 se situe.

Pour cela, la chambre de combustion 14 comporte un disque amont 22 qui s'étend dans un plan radial perpendiculaire à l'axe principal A, qui est situé à l'extrémité amont 20A du corps 20 et un disque aval 24 qui s'étend dans un plan radial perpendiculaire à l'axe principal A, qui est situé à l'extrémité aval 20B du corps 20.

De préférence, le diamètre externe de chaque disque 22, 24 est sensiblement égal au diamètre externe du corps 20.

Comme on peut le voir à la figure 2, chaque disque 22, 24 comporte un orifice central 32 qui correspond au logement cylindrique interne 21 du corps 20, pour ne pas obturer ce logement et pour permettre le passage de l'arbre 19 reliant le compresseur 12 à la turbine 16.

Chaque disque 22, 24 comporte une série de lumières 26 qui sont associées aux tubes de combustion 18. Selon un mode de réalisation, chaque disque 22, 24 comporte un nombre de lumières 26 inférieur au nombre de tubes de combustion 18.

Les lumières 26 sont situées à une même distance radiale de l'axe principal A que les tubes de combustion 18. Leurs dimensions circonférentielles et la distance circonférentielle entre deux lumières 26 consécutives est définie en fonction des phases du cycle de combustion.

Chaque disque 22, 24 est mobile en rotation autour de l'axe principal A pour que les lumières 26 viennent sélectivement en face des tubes de combustion 18 pour les ouvrir ou les fermer.

Le corps 20 comporte aussi des segments de refroidissement 28 qui sont parallèles à l'axe principal A et qui sont répartis en couronne autour des tubes de combustion 18. Les segments de refroidissement 28 sont en outre débouchants à chaque extrémité axiale du corps 20.

Ici, le nombre de segments de refroidissement 28 est égal au nombre de tubes de combustion 18 et chaque segment de refroidissement 28 est situé circonférentiellement au niveau d'un tube de combustion 18 qui lui est associé.

Il sera compris que l'invention n'est pas limitée à ce mode de réalisation et que le corps 20 peut comporter un nombre différent de segments de refroidissement 28 par rapport au nombre de tubes de combustion 18 et que leur position autour de l'axe principal A peut être différente de celle représentée aux figures.

Les segments de refroidissement 28 sont destinés à être traversés par le flux d'air comprimé provenant du compresseur 12, pour refroidir la partie radialement externe du corps 20.

Chaque disque 22, 24 destiné à obturer les tubes de combustion 18 est aussi destiné à obturer les segments de refroidissement 28 de manière sélective.

Chaque disque 22, 24 comporte ainsi une série d'orifices 30 qui sont associées aux segments de refroidissement 28.

Les orifices 30 sont situés à une même distance radiale de l'axe principal A que les segments de refroidissement 28. Leurs dimensions circonférentielles et la distance circonférentielle entre deux orifices 30 consécutifs est définie en fonction des phases du cycle de combustion.

Ici, selon un mode de réalisation préféré, les orifices 30 sont décalés circonférentiellement par rapport aux lumières 26.

Ainsi, un segment 28 est ouvert lorsque les tubes de combustion 18 qui lui sont adjacents sont fermés et inversement, un segment 28 est fermé lorsque les tubes de combustion 18 qui lui sont adjacents sont ouverts.

Cela permet notamment d'avoir une continuité de circulation du flux d'air provenant du compresseur 12, au travers de chaque segment 28 ou tube de combustion 18.

Selon un mode de réalisation préféré représenté à la figure 3, la section de chaque tube de combustion 18 est circulaire et la section de chaque segment 28 est en forme d'un arc de cercle centré sur l'axe principal A.

Comme on peut le voir à la figure 2, pour limiter les ondes de choc et éventuels décollements lors de l'ouverture et de la fermeture des tubes de combustion 18 et des segments 28, les lumières 26 et les orifices 30 des disques 22, 24 sont de forme elliptique, ou ovoïde, dont la grande dimension est orientée circonférentiellement par rapport à l'axe principal A.

Selon une variante de réalisation, les lumières 26 et les orifices 30 des disques 22, 24 sont de forme circulaire.

Différents modes d'entrainement des disques 22, 24 peuvent être prévus.

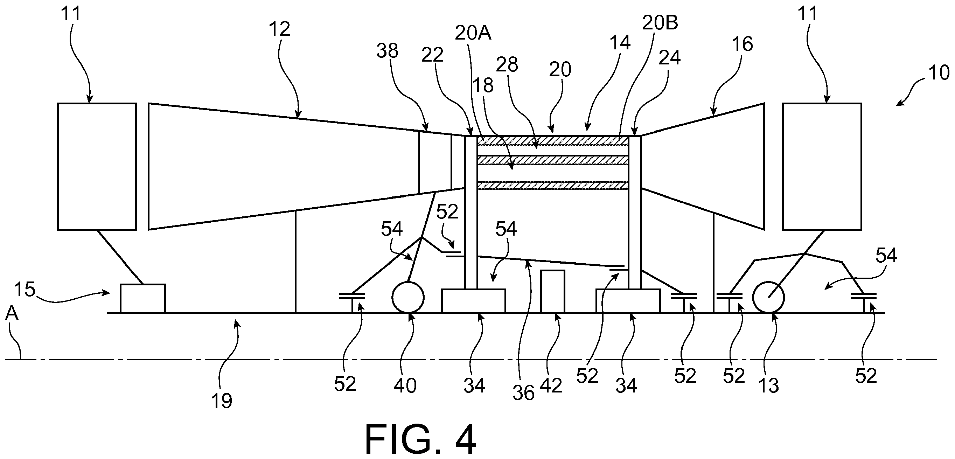

Par exemple, selon le mode de réalisation représenté à la figure 4, un réducteur de vitesse 34 est interposé entre chaque disque 22, 24 et l'arbre 19 reliant le compresseur 12 à la turbine 16.

La turbomachine 10 comporte des moyens supplémentaires 36 de guidage des disques 22, 24 en rotation autour de l'axe principal A, notamment une portion 38 du carter fixe 11 qui porte une butée axiale 40 afin de ne pas transmettre les efforts axiaux provenant du compresseur 12 ou de la turbine 16.

Cette portion 38 du carter fixe 11 porte aussi des servitudes air et huile alimentant ces moyens de guidage supplémentaires 36.

Aussi, une souplesse 42 est ajoutée à l'arbre 19 pour compenser les éventuels déplacements axiaux relatifs entre la partie amont de la turbomachine et la partie aval de la turbomachine.

La souplesse 42 est de préférence disposée axialement entre les deux disques 22, 24.

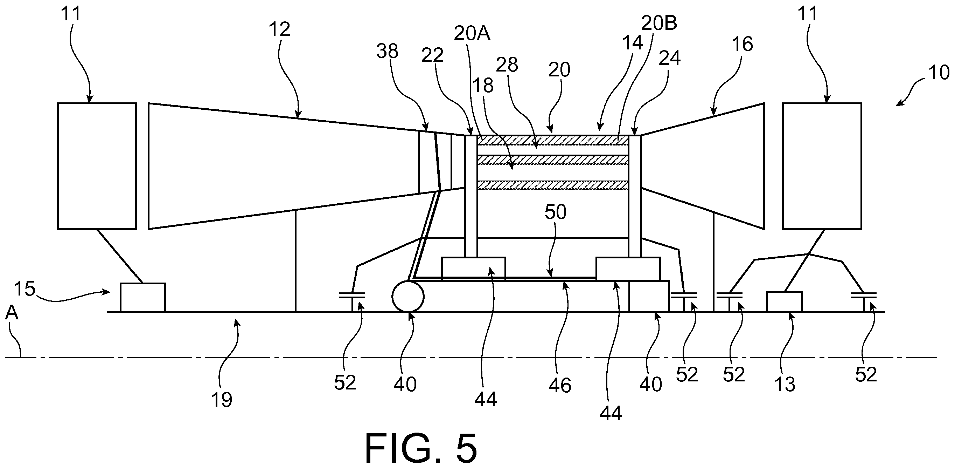

Aussi des moyens d'étanchéité 52 à l'air et à l'huile sont disposés entre les diverses parties mobiles les unes par rapport aux autres
Selon le mode de réalisation représenté à la figure 5 et selon un autre mode de réalisation des modes d'entrainement des disques 22, 24, un actionneur indépendant 44 , comme par exemple un moteur électrique ou un moteur à air, entraine chaque disque 22, 24.

La turbomachine 10 comporte alors une structure fixe 46 coopérant avec l'actionneur indépendant 44 et une portion 38 du carter fixe 11 qui porte des butées axiales 40 afin de ne pas transmettre les efforts axiaux provenant du compresseur 12 ou de la turbine 16.

Cette portion 38 du carter fixe 11 porte aussi des servitudes air et huile 50 alimentant ces moyens de guidage supplémentaires 36.

Aussi des moyens d'étanchéité 52 à l'air et à l'huile sont disposés entre les diverses parties mobiles les unes par rapport aux autres

Ces moyens d'étanchéité 52 délimitent des enceintes de lubrification 54 recevant divers équipements de la turbomachine 10.

A titre d'exemple non limitatif, en référence à la figure 4, une première enceinte 54 est située axialement en amont du disque amont 22 et elle reçoit entre autres la butée axiale 40, une deuxième enceinte 54 située axialement entre les deux disques 22, 24 reçoit la souplesse 42 et une troisième enceinte 54 située en aval du disque aval 24 reçoit le palier à billes 13 de guidage de l'arbre haute pression 19.

Selon le mode de réalisation représenté à la figure 5, une première enceinte 54 es située axialement au niveau de la chambre de combustion 14 et reçoit la butée axiale 40, les actionneurs 44 et la portion 38 du carter fixe 11, une deuxième enceinte 54 située en aval du disque aval 24 reçoit le palier à billes 13 de guidage de l'arbre haute pression 19.

Ces moyens d'entrainement des disques 22, 24 peuvent être débrayables pour maintenir les disques 22, 24 dans une position définie pour laquelle les tubes de combustion 18 sont ouverts en permanence, la chambre de combustion fonctionne alors selon le cycle de Brayton, c'est-à-dire à pression constante.

## Revendications

1. Chambre de combustion (14) de turbomachine (10) d'aéronef du type à volume constant, présentant un axe principal (A) et comportant :
- un corps (20) de révolution coaxial à l'axe principal (A) dans lequel une pluralité de tubes de combustion (18) sont formés, lesdits tubes de combustion (18) s'étendant principalement selon la direction de l'axe principal (A) du corps (20) et étant répartis en couronne autour dudit axe principal (A),
- un premier disque rotatif (22) perforé qui est monté au niveau d'une première extrémité axiale (20A) du corps (20) et qui est mobile en rotation autour de l'axe principal (A) pour ouvrir ou fermer de manière sélective une première extrémité de chacun desdits tubes de combustion (18), et
- un deuxième disque rotatif (24) perforé qui est monté au niveau d'une deuxième extrémité axiale (20B) du corps (20) et qui est mobile en rotation autour de l'axe principal (A) pour ouvrir ou fermer de manière sélective une deuxième extrémité de chacun desdits tubes de combustion (18),
où le corps (20) comporte une pluralité de segments de refroidissement (28) qui s'étendent principalement selon la direction de l'axe principal (A), qui sont répartis en couronne autour dudit axe principal (A) et autour des tubes de combustion (18).

2. Chambre de combustion (14) selon la revendication précédente, **caractérisée en ce que** chaque disque rotatif (22, 24) est coaxial à l'axe principal (A), comporte une série de lumières (26) destinées à venir en face d'une extrémité de chaque tube de combustion (18) et de manière sélective, et comporte une série d'orifices (30) destinés à venir en face d'une extrémité de chaque segment de refroidissement (28) de manière sélective.

3. Chambre de combustion (14) selon la revendication précédente, **caractérisée en ce que** les lumières (26) et/ou les orifices (30) de chaque disque rotatif (22, 24) sont de forme circulaire, elliptique, rectangulaire, oblong ou ovoïde.

4. Chambre de combustion (14) selon la revendication 2 ou 3, **caractérisée en ce que** chaque disque rotatif (22, 24) comporte un même nombre de lumières (26) que d'orifices (30) et **en ce que** les lumières (26) sont décalées circonférentiellement par rapport aux orifices (30).

5. Chambre de combustion (14) selon l'une quelconque des revendications précédentes, **caractérisée en ce que** le corps (20) est cylindrique et comporte un logement cylindrique (21) radialement central et chaque disque rotatif (22, 24) comporte un orifice central (32) qui communique avec l'extrémité associée du logement cylindrique (21) radialement central du corps (20).

6. Turbomachine (10) d'aéronef comportant une veine primaire de circulation d'air dans laquelle sont disposés, selon le sens d'écoulement d'air dans la veine primaire, au moins un compresseur (12), une chambre de combustion (14) et au moins une turbine (16),
**caractérisée en ce que** la chambre de combustion (14) est une chambre de combustion (14) selon l'une quelconque des revendications précédentes.

7. Turbomachine (10) selon la revendication précédente, qui comporte un arbre (19) reliant l'un dudit au moins un compresseur (12) à l'une de la dite au moins une turbine (16), ledit arbre (19) étant coaxial à l'axe principal (A) du corps (20) de la chambre de combustion (14), **caractérisée en ce que** l'un et/ou l'autre des disques rotatifs (22, 24) est entraîné en rotation par ledit arbre (19).

8. Turbomachine (10) selon la revendication 6, qui comporte un arbre (19) reliant l'un dudit au moins un compresseur (12) à l'une de ladite au moins une turbine (16), ledit arbre (19) étant coaxial à l'axe principal (A) du corps (20) de la chambre de combustion (14), **caractérisée en ce qu'**elle comporte un organe d'entrainement de l'un et/ou l'autre des disques rotatifs (22, 24) qui est indépendant dudit arbre (19).

9. Turbomachine (10) selon la revendication précédente, **caractérisée en ce qu'**elle comporte des moyens de régulation de la vitesse de rotation de l'un et/ou l'autre des disques rotatifs (22, 24) par rapport à la vitesse de rotation dudit arbre.

10. Turbomachine (10) selon la revendication précédente, **caractérisée en ce que** lesdits moyens de régulation sont aptes à immobiliser les disques rotatifs (22, 24) en rotation autour de l'axe principal (A).

## Patentansprüche

1. Brennkammer (14) eines Turbotriebwerks (10) eines Luftfahrzeugs in der Art mit einem konstanten Volumen, welche eine Hauptachse (A) aufweist und Folgendes beinhaltet:
- einen Drehkörper (20), koaxial zur Hauptachse (A), in dem eine Vielzahl von Brennrohren (18) gebildet sind, wobei sich die Brennrohre (18) hauptsächlich in der Richtung der Hauptachse (A) des Körpers (20) erstrecken und in einem Ring um die Hauptachse (A) herum verteilt sind,
- eine erste gelochte Rotationsscheibe (22), welche an einem ersten axialen Ende (20A) des Körpers (20) montiert ist, und die um die Hauptachse (A) herum drehbeweglich ist, um selektiv ein erstes Ende von jedem der Brennrohre (18) zu öffnen und zu schließen, und
- eine zweite gelochte Rotationsscheibe (24), welche an einem zweiten axialen Ende (20B) des Körpers (20) montiert ist, und die um die Hauptachse (A) herum drehbeweglich ist, um selektiv ein zweites Ende von jedem der Brennrohre (18) zu öffnen und zu schließen,
wobei der Körper (20) eine Vielzahl von Kühlsegmenten (28) beinhaltet, die sich hauptsächlich in der Richtung der Hauptachse (A) erstrecken, welche in einem Ring um die Hauptachse (A) und um die Brennrohre (18) herum verteilt sind.

2. Brennkammer (14) nach dem vorstehenden Anspruch, **dadurch gekennzeichnet, dass** jede Rotationsscheibe (22, 24) koaxial zur Hauptachse (A) ist, eine Reihe von Lumen (26) beinhaltet, die dazu bestimmt sind, einem Ende eines jeden Brennrohres (18) und auf selektive Art und Weise zugewandt zu sein, und eine Reihe von Öffnungen (30) beinhaltet, die dazu bestimmt sind, einem Ende eines jeden Kühlsegments (28) in einer selektiven Art und Weise zugewandt zu sein.

3. Brennkammer (14) nach dem vorstehenden Anspruch **dadurch gekennzeichnet, dass** die Lumen (26) und/oder die Öffnungen (30) einer jeden Rotationsscheibe (22, 24) in der Form kreisförmig, elliptisch, rechteckig, länglich oder eiförmig sind.

4. Brennkammer (14) nach Anspruch 2 oder 3, **dadurch gekennzeichnet, dass** jede Rotationsscheibe (22, 24) dieselbe Anzahl von Lumen (26) wie Öffnungen (30) beinhaltet, und dadurch, dass die Lumen in Bezug auf die Öffnungen (30) im Umfang versetzt sind.

5. Brennkammer (14) nach einem der vorstehenden Ansprüche, **dadurch gekennzeichnet, dass** der Körper (20) zylindrisch ist und ein radial zentrales Zylindergehäuse (21) beinhaltet, und jede Rotationsscheibe (22, 24) eine zentrale Öffnung (32) beinhaltet, die mit dem zugehörigen Ende des radial zentralen Zylindergehäuses (21) des Körpers (20) kommuniziert.

6. Turbotriebwerk (10) eines Luftfahrzeugs, welches einen Primärluftstrompfad beinhaltet, wobei mindestens ein Kompressor (12), eine Brennkammer (14) und mindestens eine Turbine (16) in der Richtung des Luftstroms in dem Primärluftstrompfad angeordnet sind,
**dadurch gekennzeichnet, dass** die Brennkammer (14) eine Brennkammer (14) nach einem der vorstehenden Ansprüche ist.

7. Turbotriebwerk (10) nach dem vorstehenden Anspruch, welches eine Welle (19) beinhaltet, die einen von dem mindestens einen Kompressor (12) mit einer von der mindestens einen Turbine (16) verbindet, wobei die Welle (19) koaxial zur Hauptachse (A) des Körpers (20) der Brennkammer (14) ist, **dadurch gekennzeichnet, dass** eine und/oder die andere der Rotationsscheiben (22, 24) durch die Welle (19) in Drehung angetrieben wird.

8. Turbotriebwerk (10) nach Anspruch 6, welches eine Welle (19) beinhaltet, die einen von dem mindestens einen Kompressor (12) mit einer von der mindestens einen Turbine (16) verbindet, wobei die Welle (19) koaxial zur Hauptachse (A) des Körpers (20) der Brennkammer (14) ist, **dadurch gekennzeichnet, dass** sie ein Antriebsglied von einer und/oder der anderen der Rotationsscheiben (22, 24) beinhaltet, das unabhängig von der Welle (19) ist.

9. Turbotriebwerk (10) nach dem vorstehenden Anspruch, **dadurch gekennzeichnet, dass** es Mittel zum Regeln der Rotationsgeschwindigkeit von einer und/oder der anderen der Rotationsscheiben (22, 24) in Bezug auf die Rotationsgeschwindigkeit der Welle beinhaltet.

10. Turbotriebwerk (10) nach dem vorstehenden Anspruch, **dadurch gekennzeichnet, dass** die Regelungsmittel imstande sind, die Drehung der Rotationsscheiben (22, 24) um die Hauptachse (A) herum stillzulegen.

## Claims

1. A combustion chamber (14) of an aircraft turbomachine (10) of constant volume type having a main axis (A) and including:
- a body (20) of revolution coaxial with the main axis (A) in which a plurality of combustion tubes (18) are formed, said combustion tubes (18) extending mainly in the direction of the main axis (A) of the body (20) and being distributed in a ring about said main axis (A),
- a first perforated rotary disc (22) which is mounted at a first axial end (20A) of the body (20) and which is movable in rotation about the main axis (A) to selectively open or close a first end of each of said combustion tubes (18), and
- a second perforated rotary disc (24) which is mounted at a second axial end (20B) of the body (20) and which is movable in rotation about the main axis (A) to selectively open or close a second end of each of said combustion tubes (18),
wherein the body (20) includes a plurality of cooling segments (28) which extend mainly in the direction of the main axis (A), which are distributed in a ring about said main axis (A) and around the combustion tubes (18).

2. The combustion chamber (14) according to the preceding claim, **characterised in that** each rotary disc (22, 24) is coaxial with the main axis (A), includes a series of lumens (26) intended to face one end of each combustion tube (18) and in a selective manner, and includes a series of orifices (30) intended to face one end of each cooling segment (28) in a selective manner.

3. The combustion chamber (14) according to the preceding claim, **characterised in that** the lumens (26) and/or the orifices (30) of each rotary disc (22, 24) are circular, elliptical, rectangular, oblong or ovoid in shape.

4. The combustion chamber (14) according to claim 2 or 3, **characterised in that** each rotary disc (22, 24) includes the same number of lumens (26) as orifices (30) and **in that** the lumens (26) are circumferentially offset relative to the orifices (30).

5. The combustion chamber (14) according to any one of the preceding claims, **characterised in that** the body (20) is cylindrical and includes a radially central cylindrical housing (21) and each rotary disc (22, 24) includes a central orifice (32) which communicates with the associated end of the radially central cylindrical housing (21) of the body (20).

6. An aircraft turbomachine (10) including a primary air flow path wherein at least one compressor (12), a combustion chamber (14) and at least one turbine (16) are disposed, in the direction of air flow in the primary flow path,
**characterised in that** the combustion chamber (14) is a combustion chamber (14) according to any one of the preceding claims.

7. The turbomachine (10) according to the preceding claim, which includes a shaft (19) connecting one of said at least one compressor (12) to one of said at least one turbine (16), said shaft (19) being coaxial with the main axis (A) of the body (20) of the combustion chamber (14), **characterised in that** one and/or the other of the rotary discs (22, 24) is driven in rotation by said shaft (19).

8. The turbomachine (10) according to claim 6, which includes a shaft (19) connecting one of said at least one compressor (12) to one of said at least one turbine (16), said shaft (19) being coaxial with the main axis (A) of the body (20) of the combustion chamber (14), **characterised in that** it includes a drive member of one and/or the other of the rotary discs (22, 24) which is independent of said shaft (19).

9. The turbomachine (10) according to the preceding claim, **characterised in that** it includes means for regulating the speed of rotation of one and/or the other of the rotary discs (22, 24) relative to the speed of rotation of said shaft.

10. The turbomachine (10) according to the preceding claim, **characterised in that** said regulating means are capable of immobilising the rotary discs (22, 24) in rotation about the main axis (A).
